# EUROPÄISCHE PATENTSCHRIFT

(11) **EP 1 439 054 B1**
(45) Veröffentlichungstag und Bekanntmachung des Hinweises auf die Patenterteilung: **28.02.2007**
(21) Anmeldenummer: 03027657.0
(22) Anmeldetag: 03.12.2003
(51) Int. Cl.: B29D 30/32, B29D 30/24

(54) **Vorrichtung zum Hochschlagen der Reifenseitenwände auf einer Reifenaufbautrommel**
Apparatus for turning up the sidewalls of a tyre on a tyre building drum.
Dispositif puor relever les flanc d'un pneu sur un tambour de confection de pneumatiques.

(30) Priorität: 14.01.2003 DE 10300969
(43) Veröffentlichungstag der Anmeldung: 21.07.2004
(73) Patentinhaber: Continental Aktiengesellschaft, 30165 Hannover (DE)
(72) Erfinder: Jungk, Andreas, 30900 Wedemark (DE)

(56) Entgegenhaltungen:
- EP-A- 1 145 834
- DE-A- 4 416 514
- DE-C- 19 934 791
- GB-A- 2 182 894
- US-A- 4 131 500

## Beschreibung

Die Erfindung betrifft eine Vorrichtung zum Hochschlagen der Reifenseitenwände auf einer Reifenaufbautrommel mit Einrichtungen zur Bombierung einer Reifenkarkasse, wobei die Reifenaufbautrommel zwei im Wesentlichen symetrisch zur Trommelmitte angeordnete Hebelsysteme aufweist, die jeweils mit einem Hebeltragkörper drehbar verbunden sind, wobei die beiden Hebeltragkörper in axialer Richtung der Reifenaufbautrommel verfahrbar sind.

Bei der herkömmlichen Herstellung von Neureifen erfolgt ein Herstellungsschritt auf einer Reifenaufbautrommel, bei der die zunächst flach aufliegende Reifenkarkasse durch einen Expansionsvorgang bombiert wird. Der eigentliche Bombiervorgang der Karkasse erfolgt beispielsweise über einen Mittenbalg, der den mittleren Bereich der Karkasse expandiert. Anschließend werden bei diesem Vorgang die beiden äußeren Seitenwände an der bombierten Karkasse hochgeschlagen und dabei um die Wulstkeme gefaltet. Dieser Vorgang des Hochkrempelns der Reifenseitenwände erfolgt entweder mit sogenannten Seitenbombierbälgen oder mit einem kranzförmig über den Umfang angeordneten Rollenhebelsystem. Beim Einsatz von Seitenbombierbälgen werden zwei im Bereich der Seitenwandlagen angeordnete Blähbälge aufgeblasen, die auf diese Weise die Seitenwände an die bombierte Karkasse pressen. Der Hochschlagvorgang mit Hilfe von Seitenbombierbälgen kann den Nachteil aufweisen, dass diese Bälge nicht bis in die Schulterbereiche des Reifenrohlings wirken, wodurch manuelle Nacharbeit erforderlich wird. Darüber hinaus sind die Seitenbombierbälge einem hohen Verschleiß unterworfen, wobei ein entsprechend häufiger Austausch erforderlich ist, der mit sehr viel Zeitaufwand verbunden ist.

In der GB 2 182 894 A, der DE 44 16 514 A, der EP 1 145 834 A und der US 4 131 500 A sind verschiedene Vorrichtungen zum Herstellen von Fahrzeugreifen offenbart.

Das Hochschlagen der Seitenwände mit Hilfe eines Rollenhebelsystems ist beispielsweise in der DE 199 34 791 C1 offenbart. Bei dieser Vorrichtung erfolgt das Auseinanderspreizen des Rollenhebelsystems über einen pneumatischen Antrieb, der aus zwei separaten Pneumatikzylindern besteht. Die beiden Pneumatikzylinder werden separat mit Druckluft beaufschlagt, wodurch das Reifenhebelsystem auseinanderspreizt und dadurch die Seitenwände an der Karkasse hochschlägt.

Ein wesentlicher Nachteil bei diesem Prinzip besteht darin, dass z. B. aufgrund von unterschiedlichen Reibungseinflüssen das Auseinanderspreizen der gegenüberliegenden Reifenhebelsysteme nicht immer gleichzeitig oder ruckartig erfolgt. Ein zeitversetztes Auseinanderspreizen der beiden Rollenhebelsysteme hat zur Folge, dass die Seitenwände nicht gleichmäßig gegen die bombierte Karkasse gedrückt werden und es dadurch zu einer fehlerhaften Verbindung zwischen beiden Materiallagen kommt, die wiederum zum Reifenausschuss führen können.

Der Erfindung liegt die Aufgabe zugrunde, eine Vorrichtung zum Hochschlagen der Reifenseitenwände auf einer Reifenaufbautrommel zu schaffen, mit der die Reifenseitenwände auf beiden Seiten der bombierten Karkasse gleichzeitig und kontinuierlich hochgeschlagen werden.

Gelöst wird die Aufgabe gemäß dem Oberbegriff und den kennzeichnenden Merkmalen des Anspruchs 1.

Vorteilhafte Weiterbildungen der Erfindung sind Gegenstand der abhängigen Ansprüche 2 bis 7.

Ein Vorteil der Erfindung ist insbesondere darin zu sehen, dass durch die erfindungsgemäße Vorrichtung die beiden gegenüberliegenden Hebelsysteme, die mit dem Hebeltragkörper drehbar verbunden sind, gleichzeitig auseinanderspreizen und dadurch die beiden Reifenseitenwände auf beiden Seiten der Karkasse synchron sowie kontinuierlich hochschlagen. Das gleichzeitige Hochschlagen der Reifenseitenwände bewirkt, dass die Materiallagen jeweils mit dem gleichen Anpressdruck gegen die bombierte Karkasse gedrückt werden, wodurch eine hohe Verbindungsqualität zwischen den Materiallagen erreicht wird. Der Einsatz der Spindeln bewirkt ferner eine durchgehend kontinuierliche Bewegung des Hebelsystems, die zu einer Steigerung der Verbindungsqualität beiträgt und dadurch zu weniger Produktionsausschuss führt.

In der Erfindung ist außerdem vorgesehen dass koaxial um die Basisspindel eine Hohlspindel mit zwei verfahrbaren Kernspannvorrichtungen angeordnet ist. Die Hohlspindel ist für die axiale Bewegung der Kernspannvorrichtungen vorgesehen. Als Hohlspindel ausgebildet besitzt sie u. a. den Vorteil, dass sie platzsparend in der Reifenaufbautrommel integriert ist.

In einer vorteilhaften Weiterbildung der Erfindung ist vorgesehen, dass die Rotation der Hohlspindel über eine Kupplung an die Rotation der Basisspindel ankoppelbar ist. Die Kupplung besitzt den Vorteil, dass die Basisspindel über die Kupplung gleichzeitig die Hohlspindel antreibt und dadurch auf einen separaten Antrieb der Hohlspindel verzichtet werden kann.

In einer weiteren vorteilhaften Weiterbildung der Erfindung ist vorgesehen, dass die Rotation der Hohlspindel über die Kupplung von der Rotation der Basisspindel entkoppelbar ist. Beim Auseinanderspreizen des Hebelsystems sollen sich nur die Hebeltragkörper weiter aufeinanderzubewegen, während hingegen die beiden Kernspannvorrichtungen stillstehen sollen. Die Trennung der Rotation der Hohlspindel von der Rotation der Basisspindel wird vorteilhafterweise über die Kupplung erreicht.

In einer weiteren vorteilhaften Weiterbildung der Erfindung ist vorgesehen, dass die Hohlspindel über mindestens ein Kugellager auf der Basisspindel gelagert ist. Das Kugellager minimiert die Reibungseinflüsse sobald die Kupplung ausgekuppelt ist und nur noch die Basisspindel weiter rotiert.

In einer weiteren vorteilhaften Weiterbildung der Erfindung ist vorgesehen, dass die Rotation der Hohlspindel über eine Bremseinrichtung arretierbar ist. Die Bremseinrichtung blockiert die Rotation der Hohlspindel vollständig und stellt damit sicher, dass sich die Kernspannvorrichtungen nicht mehr weiter bewegen können.

In einer weiteren vorteilhaften Weiterbildung der Erfindung ist vorgesehen, dass die Basisspindel und die Hohlspindel als Kugelrollspindel ausgebildet sind. Die Ausbildung der Spindeln als Kugelrollspindeln besitzt den Vorteil von geringen Reibungseinflüssen. Ferner wird durch diesen Spindeltypeinsatz, eine hohe präzise Linearbewegung des Hebeltragkörpers erreicht.

In einer weiteren vorteilhaften Weiterbildung der Erfindung ist vorgesehen, dass die Basisspindel in dem Bereich in dem sie in der Hohlspindel verläuft eine glatte Materialoberfläche aufweist. Dadurch kann die Hohlspindel an ihrer Innenseite direkt auf der Außenseite der Hohlspindel gelagert werden, wobei nur noch geringe Reibungsverluste zwischen beiden Spindeln im ausgekuppelten Zustand auftreten.

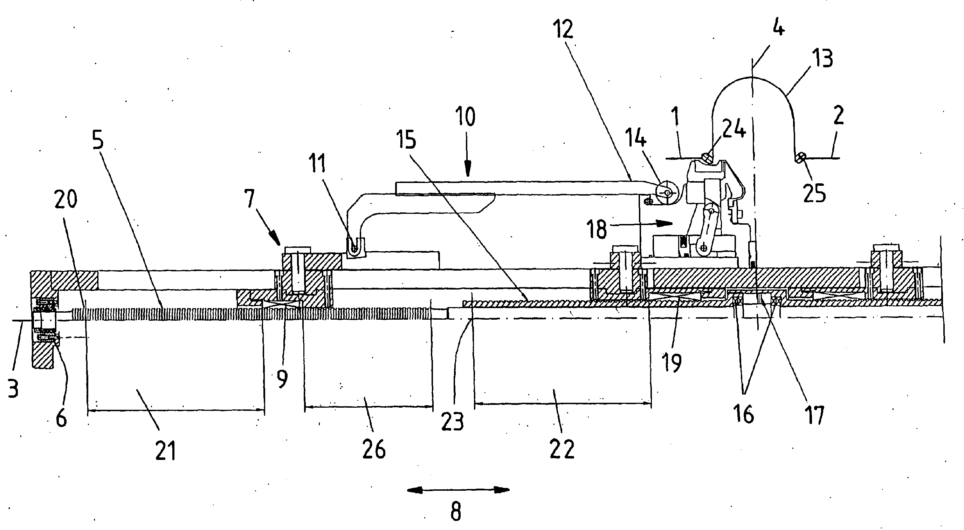

Anhand eines Ausführungsbeispiels soll die Erfindung näher erläutert werden. Die einzige Figur zeigt einen Teilausschnitt der erfindungsgemäßen Vorrichtung zum Hochschlagen der Reifenseitenwände 1 und 2 auf einer Reifenaufbautrommel. Die Reifenaufbautrommel ist im Wesentlichen achsensymmetrisch zur Trommelachse 3 und zur Trommelmitte 4 aufgebaut, weshalb die Darstellung der jeweils gegenüberliegenden Bauteile in der Figur nicht dargestellt sind. Die Basisspindel 5 ist über ein Kugellager 6 in der Reifenaufbautrommel drehbar gelagert und wird beispielsweise über einen in der Figur nicht dargestellten Riemenantrieb angetrieben. Der Hebeltragkörper 7 ist mit einer Spindelmutter 9 verbunden, wodurch der Hebeltragkörper 7 durch die Rotation der Basisspindel 5 in axialer Richtung 8 zur Trommelmitte 4 hin verfahren wird. An dem Hebeltragkörper 7 ist ein Hebelsystem 10 an der Lagerung 11 drehbar angebunden. Das Hebelsystem 10 besteht aus einer Vielzahl von um die Trommelachse 3 angeordneten Rollenhebeln 12, die jeweils mit dem Hebeltragkörper 7 drehbar verbunden sind. Beim Verfahren des Hebeltragkörpers 7 in Richtung zur Trommelmitte 4 spreizen sich die einzelnen Rollenhebel auseinander und schlagen auf diese Weise die Seitenwand 1 an der bereits bombierten Karkasse hoch. Die am Rollenhebel 12 gelagerte Rolle 14 drückt bei diesem Vorgang die Seitenwand 1 gegen die Außenseite der Karkasse 13 und verbindet dadurch beide Lagen miteinander. Die Basisspindel 5 ist durchgängig sowie achsensymmetrisch zur Trommelmitte 4 und auf der gegenüberliegenden Seite ist spiegelverkehrt ein in der Figur nicht dargestellter zweiter Hebeltragkörper mit einem entsprechenden Hebelsystem mit der Basisspindel 5 verbunden. Das Gewinde der Basisspindel 5 auf der zur Trommelmitte 4 gegenüberliegenden Seite besitzt eine gegenläufige gleichgroße Gewindesteigung, so dass beide Hebeltragkörper 7 sich bei Rotation der Basisspindel 5 synchron, mittensymmetrisch zur Trommelmitte 4 aufeinanderzubewegen. Diese synchrone Bewegung hat zur Folge, dass beide Hebelsysteme gleichzeitig symmetrisch und kontinuierlich auseinanderspreizen, wodurch die beiden Seitenwände 1 und 2 gleichzeitig an der bombierten Karkasse 13 hochgeschlagen werden. Im mittleren Bereich der Basisspindel 5 ist koaxial zu dieser eine Hohlspindel 15 angeordnet, die über vier Kugellager 16 auf der Basisspindel 5 gelagert ist. Beide Spindeln sind über einen Spalt von geringer Abmessung getrennt. Die Basisspindel 5 besitzt im mittleren Bereich eine glatte Oberfläche und hat dadurch in diesem Bereich die Funktion einer durchgängigen Welle. Über die Kupplung 17, die pneumatisch, elektrisch, hydraulisch oder mechanisch schaltbar ist, wird die Rotation der Basisspindel 5 mit der Hohlspindel 15 gekoppelt. Auf der Hohlspindel 15 ist koaxial die Kemspannvorrichtung 18 angeordnet, die über die Spindelmutter 19 und die Rotation der Hohlspindel 15 in axialer Richtung 8 verfahrbar ist. Auf der zur Trommelmitte 4 gegenüberliegenden Seite ist achsensymmetrisch die zweite in der Figur nicht dargestellte Kemspannvorrichtung angeordnet, die über die Hohlspindel 15 ebenfalls in axialer Richtung 8 synchron zur Kemspannvorrichtung 18 zur Trommelmitte 4 verfahren wird.

Die Reifenkonfektion auf der Reifenaufbautrommel beginnt zunächst mit dem Bombiervorgang, bei dem die Kupplung 17 so geschaltet ist, dass die Hohlspindel 15 und die Basisspindel 5 mit gleicher Rotationsgeschwindigkeit rotieren. Bei diesem Vorgang verfährt der Hebeltragkörper 7 aus der Position 20 um den Abstand 21 in Richtung Trommelmitte 4. Da die Kupplung 17 eingekuppelt ist, rotiert ebenfalls die Hohlspindel 15 und verfährt dadurch die Kemspannvorrichtung 18 aus der Anfangsposition 23 um den Abstand 22 zur Trommelmitte 4. Der Hebeltragkörper 7 und die Kernspannvorrichtung 18 werden parallel mit der gleichen Geschwindigkeit verfahren, da die Basisspindel 5 und die Hohlspindel 15 die gleiche Gewindesteigung besitzen. Die Wulstkerne 24 und 25 werden dabei zur Trommelmitte 4 hin verfahren und gleichzeitig die Karkasse 13 bombiert. Anschließend wird die Hohlspindel 15 über die Kupplung 17 von der Rotation der Basisspindel 5 entkoppelt und gleichzeitig über eine in der Kupplung 17 integrierte Bremsvorrichtung arretiert, so dass die Kernspannvorrichtung sich nicht weiter bewegen kann. Als nächstes beginnt das Hochschlagen der Reifenseitenwände 1 und 2, wobei die Basisspindel 5 weiterrotiert, den Hebeltragkörper 7 um den Abstand 26 zur Trommelmitte 4 verfährt und dadurch das Hebelsystem 10 auseinanderspreizt. Bei diesem Vorgang werden synchron von beiden Seiten die Seitenwände 1 und 2 gleichzeitig sowie kontinuierlich an der Karkasse hochgeschlagen und dadurch die Reifenlagen sicher miteinander verbunden.

### Bezugszeichenliste

### (ist Teil der Beschreibung)

- 1: linke Reifenseitenwand
- 2: rechte Reifenseitenwand
- 3: Trommelachse
- 4: Trommelmitte
- 5: Basisspindel
- 6: Kugellager
- 7: Hebeltragkörper
- 8: axiale Richtung
- 9: Spindelmutter
- 10: Hebelsystem
- 11: Lagerung
- 12: Rollenhebel
- 13: Karkasse
- 14: Rolle
- 15: Hohlspindel
- 16: Kugellager
- 17: Kupplung
- 18: Kernspannvorrichtung
- 19: Spindelmutter
- 20: Anfangsposition des Hebeltragkörpers
- 21: Abstand, den der Hebeltragkörper beim Bombieren zurücklegt
- 22: Abstand, den die Kernspannvorrichtung beim Bombieren zurücklegt
- 23: Anfangsposition der Kemspannvorrichtung
- 24: Wulstkern
- 25: Wulstkern
- 26: Abstand, den nur der Hebeltragkörper beim Hochschlagen der Reifenseitenwand zurücklegt

## Patentansprüche

1. Vorrichtung zum Hochschlagen der Reifenseitenwände (1, 2) auf einer Reifenaufbautrommel mit Einrichtungen zur Bombierung einer Reifenkarkasse (3),
wobei die Reifenaufbautrommel zwei im Wesentlichen symetrisch zur Trommelmitte (4) angeordnete Hebelsysteme (10) aufweist, die jeweils mit einem Hebeltragkörper (7) drehbar verbunden sind,
wobei die beiden Hebeltragkörper (7) in axialer Richtung (8) der Reifenaufbautrommel verfahrbar sind,
**dadurch gekennzeichnet, dass**
beide Hebeltragkörper (7) über eine Basis-Spindel (5) in axialer Richtung (8) synchron gegeneinander verfahrbar sind,
wobei koaxial um die Basisspindel (5) eine Hohlspindel (15) mit zwei verfahrbaren Kernspannvorrichtungen (18) angeordnet ist.

2. Vorrichtung nach Anspruch 1,
**dadurch gekennzeichnet, dass**
die Rotation der Hohlspindel (15) über eine Kupplung (17) an die Rotation der Basisspindel (5) ankoppelbar ist.

3. Vorrichtung nach Anspruch 1 oder 2,
**dadurch gekennzeichnet, dass**
die Rotation der Hohlspindel (15) über die Kupplung (17) von der Rotation der Basisspindel (5) entkoppelbar ist.

4. Vorrichtung nach einem der Ansprüche 1 bis 3,
**dadurch gekennzeichnet,**
**dass** die Hohlspindel (15) über mindestens ein Kugellager (16) auf der Basisspindel (5) gelagert ist.

5. Vorrichtung nach einem der Ansprüche 1 bis 4,
**dadurch gekennzeichnet, dass**
die Rotation der Hohlspindel (15) über eine Bremseinrichtung arretierbar ist.

6. Vorrichtung nach einem der Ansprüche 1 bis 5,
**dadurch gekennzeichnet, dass**
die Basisspindel (5) und die Hohlspindel (15) als Kugelrollspindel ausgebildet sind.

7. Vorrichtung nach einem der Ansprüche 1 bis 6,
**dadurch gekennzeichnet, dass**
die Basisspindel (5) in dem Bereich in dem sie in der Hohlspindel (15) verläuft eine glatte Materialoberfläche aufweist.

## Claims

1. Apparatus for turning up the sidewalls (1, 2) of a tyre on a tyre building drum with devices for cambering a tyre carcass (3), the tyre building drum having two lever systems (10) which are arranged substantially symmetrically in relation to the centre of the drum (4) and are in each case pivotably connected to a lever carrier (7), the two lever carriers (7) being movable in the axial direction (8) of the tyre building drum, **characterized in that** the two lever carriers (7) can be moved synchronously toward each other in the axial direction (8) by means of a base spindle (5), a hollow spindle (15) with two movable core clamping devices (18) being arranged coaxially around the base spindle (5).

2. Apparatus according to Claim 1, **characterized in that** the rotation of the hollow spindle (15) can be coupled to the rotation of the base spindle (5) by means of a clutch (17).

3. Apparatus according to Claim 1 or 2, **characterized in that** the rotation of the hollow spindle (15) can be decoupled from the rotation of the base spindle (5) by means of the clutch (17).

4. Apparatus according to one of Claims 1 to 3, **characterized in that** the hollow spindle (15) is mounted on the base spindle (5) by means of at least one ball bearing (16).

5. Apparatus according to one of Claims 1 to 4, **characterized in that** the rotation of the hollow spindle (15) can be arrested by means of a braking device.

6. Apparatus according to one of Claims 1 to 5, **characterized in that** the base spindle (5) and the hollow spindle (15) are formed as ball castor spindles.

7. Apparatus according to one of Claims 1 to 6, **characterized in that** the base spindle (5) has a smooth material surface in the region in which it runs in the hollow spindle (15).

## Revendications

1. Dispositif pour relever les flancs d'un pneumatique (1, 2) sur un tambour de confection de pneumatiques avec des dispositifs de bombage d'une carcasse de pneumatique (3), le tambour de confection de pneumatiques présentant deux systèmes de levier (10) disposés sensiblement symétriquement par rapport au centre du tambour (4), lesquels sont connectés à rotation à chaque fois à un corps de support de levier (7),
les deux corps de support de levier (7) pouvant être déplacés dans la direction axiale (8) du tambour de confection de pneumatiques,
**caractérisé en ce que**
les deux corps de support de levier (7) peuvent être déplacés l'un par rapport à l'autre de manière synchrone dans la direction axiale (8) par le biais d'une broche de base (5),
une broche creuse (15) étant disposée coaxialement à la broche de base (5) avec deux dispositifs de serrage de noyau déplaçables (18).

2. Dispositif selon la revendication 1,
**caractérisé en ce que**
la rotation de la broche creuse (15) peut être accouplée par le biais d'un accouplement (17) à la rotation de la broche de base (5).

3. Dispositif selon la revendication 1 ou 2,
**caractérisé en ce que**
la rotation de la broche creuse (15) peut être désaccouplée de la rotation de la broche de base (5) par le biais de l'accouplement (17).

4. Dispositif selon l'une quelconque des revendications 1 à 3,
**caractérisé en ce que**
la broche creuse (15) est montée sur la broche de base (5) par le biais d'au moins un roulement à billes (16).

5. Dispositif selon l'une quelconque des revendications 1 à 4,
**caractérisé en ce que**
la rotation de la broche creuse (15) peut être bloquée par un dispositif de freinage.

6. Dispositif selon l'une quelconque des revendications 1 à 5,
**caractérisé en ce que**
la broche de base (5) et la broche creuse (15) sont réalisées sous forme de vis à billes.

7. Dispositif selon l'une quelconque des revendications 1 à 6,
**caractérisé en ce que**
la broche de base (5) présente dans la région dans laquelle elle s'étend dans la broche creuse (15), une surface de matériau lisse.
